# EUROPEAN PATENT APPLICATION

(11) **EP 1 876 207 A1**
(43) Date of publication of application: **09.01.2008**
(21) Application number: 06725851.7
(22) Date of filing: 11.04.2006
(51) Int. Cl.: C08L 95/00

(54) **BITUMEN MODIFYING DEVICE**

(30) Priority: 12.04.2005 ES 200500861
(71) Applicant: Dannert, Dieter, Torrelodones, 28250 (ES)
(72) Inventor: Dannert, Dieter, Torrelodones, 28250 (ES)
(74) Representative: Elzaburu Marquez, Alberto
(86) International application number: PCT/ES2006/070046
(87) International publication number: WO 2006/108904

(57) **Abstract**

A device for easily and efficiently modifying bitumens to give bitumens modified with rubber powder from used tyres and suitable for the production of asphalt aggregates. The device consists of a hopper for the rubber powder fed through a metering unit to a pre-mixer into which bitumen is also delivered from the facility's tanks. Mixing is completed in said pre-mixer once the mixture is highly uniform, although the rubber particle size is not substantially reduced, then the mixture is transferred into a further mixing unit provided with a mixing member such as a colloid mill or the like or a mixing pump to give a fully uniform mixture that is then transferred into a holding tank or directly to the aggregates plant.

## Description

### Purpose of the Invention

This invention refers to a device for bitumen modification, which provides essential novelty characteristics and remarkable advantages over means that are known and used for the same purposes in the current state of the technique.

More specifically, the invention proposes the development of a device whereby it is possible to perform bitumen modification with the addition of granules or powder obtained from discarded rubber products, especially tyres. It provides the unique advantage that it allows a mixture to be obtained with a very high degree of uniformity, thanks to the products involved being subject to several mixing phases, with the contribution of an additional mixer connected to an intermediate storage tank. This tank is positioned upstream of the final storage tank, or from which, the final product may be transferred to the application or usage plant of application or use, where appropriate. The mixture thus obtained is especially suitable for the preparation of asphalt mixes likely to be used as construction material, especially for highways, divided highways, freeways, urban roads, etc., as well as for the manufacturing of membranes, sheets, waterproofing, sealants for fissures, cracks and joints, emulsions and similar applications.

The field of application of the invention is within the industrial sector that is devoted to the manufacturing of construction materials, especially for highways, divided highways, freeways, urban roads, etc., as well as for the manufacturing of membranes, sheets, waterproofing, sealants for fissures, cracks and joints, emulsions and similar applications.

### Background and Summary of the Invention

Bitumen modification constitutes a technique that is well known by the experts in the field, for highway construction, whereby considerable improvements are obtained with respect to a series of characteristics of the asphalt mixes.

Likewise, the experts in the field are also aware of the fact that in a conventional asphalt mix, between 94 - 96% of aggregates and sand of different sizes are used, and between 4 - 6% of bitumen. The use of these mixes provides enormous advantages over other materials in highway construction. However, as a counter point, these mixes also offer certain disadvantages, which basically are that they tend to soften with the heat of the highway, and crack with the cold. The integration of thermoplastic or elastomer materials into the bitumen, whether separately or combined, forming a modified bituminous binder, improves the performance of the mix extraordinarily against the most extreme temperatures, achieving other important mechanical advantages as well.

When modifying the bitumen, i.e. during the preparation process of the thermoplastic and elastomer mixtures with the bitumen, one of the fundamental problems consists of getting the mixture to combine quickly, economically, safely and effectively, with the problem centring on achieving perfect homogenization and stability of the mixture, without the destruction or decomposition of any of the mixture components taking place.

In the case of synthetic rubber, especially butadienestyrene rubber, the problem lies in the fact that the melting point of these materials is close to their point of destruction. Therefore, homogenization with conventional media must be carried out with great care, given the danger that a temperature increase during the process would represent, often with the desired mixture stability not being maintained for the necessary amount of time.

Mainly due to the different molecular weights of the two materials that are to be mixed, achieving perfect homogenization represents even more difficulties. One of the methods used would necessarily involve a prolonged period of time until achieving a homogenous mixture, with the consequent cost of energy and material. It is therefore essential to have appropriate devices that allow one to carry out the preparation of the desired product under proper conditions and within the set parameters, in order to reach a modified bitumen that shows effective performance when used in any of the planned applications for the bitumen, which have been cited above.

Through Patent Document No. 200101702, from the same patent holder, a system was already proposed whereby the bitumen can be properly modified, with said system having a simple design and being economical to operate. The system described in this document plans for the placement of a storage silo for the rubber powder with the applicable additives, from which said rubber powder is fed through a dosing device, into a mixer where a pipe provides a flow coming from the tanks containing the bitumen. In this manner the effective mixing of both ingredients is performed, and with the mixture being directly supplied either to a standby tank or to the application plant. The temperature is controlled both in the mixing device and in the storage tank.

The system proposed by this previous patent had already meant a significant advance with regard to systems and media for preparing modified bitumen, with respect to what was known up to that time. However, experiments and tests that were conducted subsequently have shown that it is still possible to improve the characteristics of uniformity and homogeneity in the finished product, with all the advantages arising therefrom, without the need to modify the operating parameters, and by using a device that is somewhat modified in comparison to the system from the aforementioned patent. This allows the product to be submitted to several successive mixing operations, and to be carried to the final storage tank or the application plant, where appropriate, only when it is deemed or proven that said characteristics of uniformity and homogeneity have been reached.

In this regard, the device proposed by this invention is unique in the fact that after the supply of the rubber powder and its additives up to a first mixing device, or "pre-mixer", to which the bitumen is added before, at the same time or after the rubber powder, intended to achieve a uniform distribution of the rubber powder in the bitumen, from which this pre-mixture is fed into a second tank (or intermediate tank), from where it flows into a second mixing device, i.e. a mixer that is outside the first tank, where it is submitted to an energy mixture. At the outlet of this device, there is a three-way valve that acts selectively to return the product received from the external mixer back into said second tank in order to be submitted to other mixing operations; or it is allowed to pass through to a second valve, which upon being subject to a selectable action, carries the final modified bitumen to a final storage tank, or to a pipe that carries it to the application plant or location. Means have been provided for maintaining the temperature both in the pre-mixing device and in the tanks that are part of the device.

According to an alternative embodiment, when the number of mixing operations do not need to be controlled for the modified bitumen components, the intermediate tank and the final storage tank may be a single element, so that the three-way valve located at the outlet of the external mixer and connected to said intermediate tank, will now be connected to said single storage and product recirculation element.

### Brief Description of the Drawings

These and other characteristics and advantages of the invention may be more clearly highlighted from the detailed description that follows for a preferred embodiment of the invention, which is given only as an illustration and not as a limitation, in reference to the attached drawings, where:

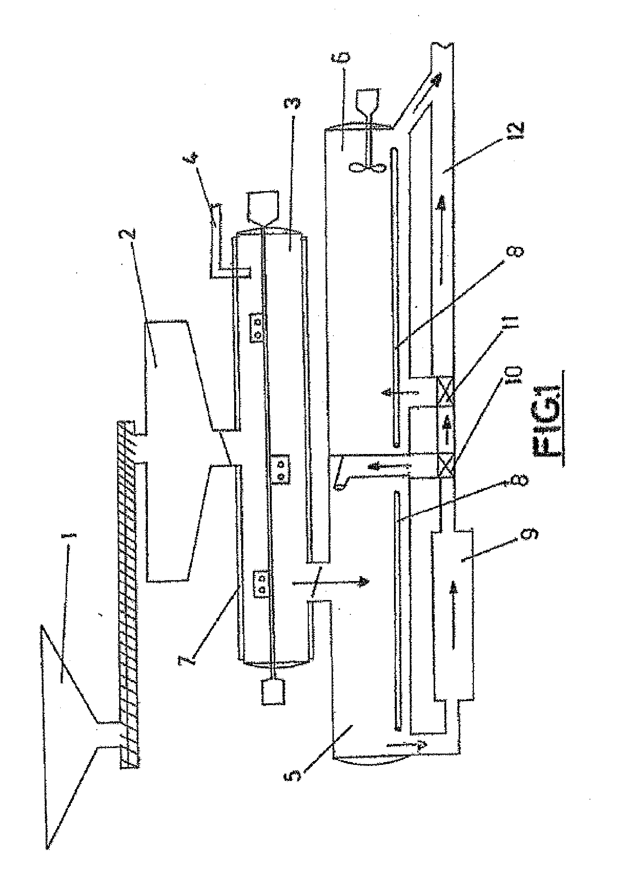

Figure 1 shows a schematic representation of the different modules that make up the bitumen modifier device.

### Description of a Preferred Embodiment of the Invention

As briefly explained above, the detailed description of the characteristics that define the preferred embodiment of the invention's system, will be carried out hereafter with the assistance of the single Figure of the attached drawings. In said schematic representation, there is bitumen modifier equipment that is operated according to the invention instructions. As noted, the equipment consists of a silo 1 intended for containing the rubber powder with given additives, the outlet of which is connected to a mixing device 3, which, in the case of the representation, is directly attached to the dosing device 2 and the mixer 3, and may be separated by a certain distance. The rubber powder is carried to mixer 3, with the assistance of a conveyer belt, worm gear, any type of pneumatic system or any device or means that is appropriate for the intended purposes. The system may also consist of more than one mixer 3 to increase the production capacity.

In the representation of Figure 1, one can also see that mixer 3 empties into outlet 4 from a pipe that goes from the tanks of the mixing plant that contains the bitumen, and in such a way that through said pipe the bitumen is released into the mixer. Meanwhile, this mixer has a single outlet directly attached to a tank 5 that is a final mixing unit, and therefore mixer 3 could be considered as a "pre-mixer", where the intent is to distribute the rubber powder particles as quickly as possible and uniformly into the bitumen, without significantly reducing the size of the particles.

The bitumen pre-mixed in mixing device 3 and transferred to tank 5 is carried through a pipe to an external mixing device 9, which may be a colloidal mill or other appropriate mill, or a pump for mixing purposes that expels the bitumen once again into tank 5, from where it flows again to mixing device 9. In this manner, bitumen circulation takes place through mixing device 9 until perfect homogenisation of the product is achieved.

During this circulation, valve 10 blocks the outlet of the modified bitumen into tank 6 and into outlet pipe 12 to the plant. Once the homogenization process is complete, and the rubber is completed diluted into the bitumen, valve 10 is activated, which is a three-way valve, such that the bitumen expelled from mixer 9 does not circulate into tank 5, but according to the position of valve 11, it is transferred to standby tank 6 or directly to the plant through pipe 12.

In the event that it is not deemed necessary or suitable to control the exact number of bitumen passes through mixing device 9, the separation between tank 5 and 6 can be removed, thus forming a single tank. Valve 10 is placed at the end of tank 6, and mixer 9 thus causes the circulation of the entire contents of the tank, and at the same time the bitumen required by the plant is expelled through the corresponding pipe.

In order to maintain the temperature within the proper margins both inside mixer 3 and inside tank 5 and 6, the creation of a thermal oil heating chamber 7 has been planned, which surrounds said mixer 3 externally. In addition, a coil 8 is provided for, located inside tanks 5 and 6. Furthermore, all bitumen carrying pipes, valves and mixing device 9 are heated through thermal oil.

According to the foregoing, the operating process offered by the invention system is highly simplified and easy to perform. In this manner, the bitumen coming from the tanks of the mixing plant access the inside of mixer 3 through pipe 4, at a preset temperature of about 200°C, and more preferably between 150 - 180°C, while the rubber powder with additives coming from silo 1, spills into mixer 3 through dosing device 2, at a measured quantity that represents 5 - 25% of the total weight of the mixture. The spilling of this powder can be done before, after or at the same time as the bitumen. Under these conditions, mixer device 3 is activated, with energy mixing over the time that is necessary to achieve uniform distribution of the rubber powder into the bitumen, without seeking a perfect homogenization of the mixture. This mixture is transferred to tank 5, from where it flows into external mixing device 9, where either a mill or pump causes an intense mechanical mixing effect on the bitumen and powder mixture, contrary to the soft mixing effect of mixer 3.

After several passes through this device 9, by the circulation of the bitumen through tank 5, with the powder particles reduced to a minimum, being close to complete dilution and perfect homogenization, the final product thus obtained is transferred to tank 6 or several standby tanks, from where it may be later pumped to the mixing plant. This is unless circumstances make it advisable to pass the product to the plant directly from mixer 9.

According to the invention, obtaining the homogeneity of the mixture and maintaining the product in the standby tanks under the proper conditions, requires that the respective temperature be maintained within margins, which as has been stated before, are in the range of 150 - 180°C. This is easily achieved through the installation of heating provided by the aforementioned heating chamber 7 for mixer 3, and the worm gear 8 from tanks 5 and 6.

As will be understood, the different pipes and outlets from the various devices that are involved in the invention system, will preferably be equipped with valves or other conventional means for regulating the flow of materials and substances that must be supplied through them.

It is not deemed necessary to make the contents of this description any more extensive in order for an expert in the field to be able to understand its scope and the advantages coming from the invention, as well as for developing and implementing the purpose hereof.

However, it must be understood that the invention has been described according to a preferred embodiment hereof. Therefore, it may be subject to modifications without this involving any alteration to the operation of said invention. These modifications may affect the characteristics of the described device and the very components of the mixture or the proportions in which they are supplied.

## Claims

1. Device for bitumen modification, whereby it is possible to obtain modified bitumen with the incorporation of granules or powder from discarded rubber products, especially from used tyres, for their application to the preparation of asphalt agglomerates that are usable as a construction material for highways, divided highways, freeways or other urban roads, as well as for the manufacturing of membranes, sheets, waterproofing, sealants for fissures, cracks and joints, emulsions and similar applications, being this device of the type that incorporates an element or silo (1) for rubber powder storage, so that this powder may be fed into a device (3) for mixing through a dosing device (2), **characterized in that** said mixing device (3) constitutes a pre-mixer of the components involved, i.e. the rubber powder with its additives and the bitumen fed through a pipe (4), intended for achieving uniform distribution of the rubber powder into the bitumen, this pre-mixer being in communication with an intermediate device (5) from which the pre-mixture flows to an external mixer (9), where a three-way valve (10) has been provided at its outlet, whereby it is selectively determined whether the mixture is returned again to said intermediate tank to be subject to new mixing operations in the aforementioned external mixer (9), or is sent to a second valve (11), once it has been made uniform and homogenous, whereby it is selectively determined whether the final mixture is sent to a final storage tank (6) of the product or to a feed pipe (12) to the application plant or location.

2. Device for bitumen modification according to claim 1,
**characterized in that** the external mixing device (9) consists essentially of a colloidal mill or other appropriate mill, or a pump for mixing purposes.

3. Device for bitumen modification according to claims 1 and 2, **characterized by** the inclusion of means for maintaining the temperature in the pre-mixer (3), the intermediate tank (5) and in the modified bitumen storage tank (6).

4. Device according to one or more of the above claims, **characterized in that**, in the case of an alternative embodiment where it is not necessary to control the number of re-circulations of the product from the intermediate tank through the external mixer (9), both the intermediate tank (5) and the final tank (6) are joined together, constituting a single tank, and the three-way pump (10) is connected to said single tank.
